# EUROPEAN PATENT SPECIFICATION

(11) **EP 3 732 984 B1**
(45) Date of publication and mention of the grant of the patent: **14.02.2024**
(21) Application number: 19382330.9
(22) Date of filing: 02.05.2019
(51) Int. Cl.: A22C 15/00, B65G 35/06

(54) **FOOD PRODUCT TREATMENT PLANT AND METHOD**
ANLAGE UND VERFAHREN ZUR BEHANDLUNG VON LEBENSMITTELPRODUKTEN
INSTALLATION ET PROCÉDÉ DE TRAITEMENT DE PRODUITS ALIMENTAIRES

(43) Date of publication of application: 04.11.2020
(73) Proprietor: Metalquimia, SAU, 17007 Girona (ES)
(72) Inventor: LAGARES GAMERO, Josep, 17850 Besalú (ES); SCALERANDI, Federico, 20871 Vimercate (MB) (IT)
(74) Representative: Juncosa Miró, Jaime

(56) References cited:
- GB-A- 785 297
- US-A1- 2014 030 971
- US-A1- 2019 000 093
- US-B2- 8 795 038
- US-B2- 8 894 473
- US-B2- 9 107 425

## Description

### Field of the Art

According to a first aspect, the present invention relates to a food product processing plant, and according to a second aspect, to a food product processing method in said plant.

The food product is typically filled meat or meat substitute product forming an elongated food product in the form of sausage or the like, and the processing applied will also preferably be processing consisting of baking, cooking, smoking, freezing, thawing, sterilization, etc.

The plant shall consist of a conveying device loading food product into a loading unit, conveying it through one or more processing units where the food product is subjected to one of the processing types described above, or others, during conveyance thereof, and unloading it in an unloading unit once it has been processed.

### State of the Art

Document US6086469 describes a food product processing plant of the type proposed, including a loading unit, several food product processing units, and an unloading unit that are connected via a conveying device formed by a rail forming a closed loop along which there runs a chain from where there are hung hooks from which the food product in the form of sausage is hung. The hooks are arranged along the chain uniformly and equidistant with respect to one another.

Said chain constitutes an actuating device bringing about the simultaneous movement of all the hooks along the rail.

This solution requires the chain to be extremely long and to have a winding path along the entire rail, which complicates repair and replacement. Furthermore, such a long chain may suffer elongation problems which disrupt the proper operation of the plant. Furthermore, said actuating device does not allow distinct movement of different hooks of the plant, which complicates the regulation and adaptation of the operation of the plant to different types of food products which for example require different processing times in a given processing unit.

Documents CA2984668, US2014315477, and US2005263371 do not describe a processing plant, but rather a loading unit for loading batches of food products into rigid bars for then introducing said rigid bars in processing units.

The loading unit described in the first two documents CA2984668 and US2014315477 includes a closed-loop rail along which there runs a chain from which there hang hooks, similar to the system described in the first document mentioned above.

In these two documents, the hooks are clustered together, leaving some chain segments devoid of hooks.

Since the actuating device of these two documents are identical to that described above and presents the same problems, and since the hooks are actuated by the same actuating device it is impossible to move some hooks separately from the rest of the hook, modifying their separation.

The loading unit described in the third document US2005263371 consists of two parallel closed-loop rails, each one provided with a chain running along the rail and including a segment with hooks, with the rest of the chain being devoid of hooks.

Each rail has hooks arranged in succession in only one segment thereof, the rest of the rail being free for the movement of said hooks.

Therefore, the hooks circulating on one of the rails, actuated by an actuating unit, can move independently of the hooks located in the other rail actuated by another actuating unit, allowing a distinct movement of the hooks on both rails.

The actuating device based on chains parallel to the rails has the same problems as those described in relation to the earlier document from the state of the art. Furthermore, since a rail and an actuating unit are required for each group of hooks, the number of groups of independent hooks is limited and the plant is more expensive.

Documents US2014/030971A1 and US8894473B2 describe alternative methods and apparatuses for suspending sausages using hooks which can be moved independently to each other.

### Brief Description of the Invention

According to a first aspect, the present invention relates to a food product processing plant according to claim 1.

Food products are understood to mean products intended for being consumed, typically meat products, such as for example sausages or other filled meat products, or meat product substitutes for example made of soybean, or another plant product replacement of meat.

The processing of said food products will be any processing intended for baking, cooking, steaming, smoking, sterilizing, freezing, thawing, or other similar processes applied to said food products.

In a known manner, the present invention proposes that the plant includes:
- a food product loading unit, one or more food product processing units, and a food product unloading unit arranged successively and connected via a food product conveying device;
wherein the conveying device includes:
- a rail defining a conveyance path going through said one or more processing units;
- a plurality of carriages movably supported on said rail, each carriage including a hook configured for hanging food items for the conveyance thereof;
- an actuating device configured for driving said plurality of carriages along the rail.

The mentioned processing units are chambers intended for applying a processing to the food product housed therein, which in this case will be continuous processing chambers, for example ovens and/or smokers inside which a high temperature is reached for cooking the food product and/or in which smoke is applied to give the fool product flavor.

The conveying device is in charge of collecting the food product in the loading unit, conveying it through the processing units where it receives the processing described above, and delivering said already processed food product in the unloading unit.

The conveying device consists of a rail on which a plurality of carriages circulate, each one provided with a hook from which the food product is hung for the conveyance thereof along the conveyance path defined by said rail, going through the processing units.

The carriages are supported on the rail such that they can move along its length. Typically this is achieved by means of a stationary continuous rail and including projections made of a material with a low coefficient of friction, such as hard plastic or metal with a minimum surface of contact with the rail, which rest on the rail, allowing the sliding along its length, or by means of wheels attached to the carriage and likewise supported on the rail.

It is optionally contemplated for the carriages forming the trains of carriages to rest, when they are going through an active rail segment, directly on the actuating unit, such that part of said actuating unit acts as a rail in said active rail segment. This solution reduces the components and lowers the cost of the installation. In such case, the passive rail segments will likewise include a stationary rail on which the carriages slide as described above.

In the preferred solution of the actuation units, in which these are formed by a continuous-loop belt tensed between pulleys, the carriages will be held on said belts or hung from same.

Alternatively, the carriages will be supported on the rail both in the active rail segments and in the passive rail segments, and the actuation units will only drive them without bearing the weight thereof.

The food product must therefore be a food product susceptible to being conveyed while hung, i.e., it must consist of elongated elements of a certain length provided with a hooking point susceptible to being hung from a hook. Typically, each batch of food product will be a string of sausages, for example with tens of sausages, which will be hung from multiple hooks of successive carriages forming loops.

Each processing unit will have an inlet and an outlet which said rail goes through, such that the carriages, loaded with food product hung from their hooks, enter through said inlet and are conveyed therethrough until exiting through the outlet. During the time they remain inside the processing unit, the food product will receive said processing.

The length of the rail segment located inside a processing unit, together with the movement speed of the carriages along said rail segment, determines the time during which a specific food product receives processing inside the mentioned processing unit.

The carriages are conveyed along the rail by means of an actuating device in charge of driving them.

The present invention proposes, in a manner also known in the existing state of the art, that:
- the conveying device includes multiple independent and successive trains of carriages along said rail, each train of carriages being intended for supporting a batch of food product;
- the actuating device includes multiple independently actuated actuating units, configured for driving different trains of carriages located at different positions of the rail, allowing independent and distinct actuation of the multiple trains of carriages; and
- the rail includes at least one passive rail segment devoid of actuating units.

In other words, the present invention proposes that said carriages with hooks are clustered together, forming multiple successive trains of carriages separated from others, such that each of said trains of carriages may move along the rail autonomously with respect to the rest of the trains of carriages, as they are not attached to one another.

The present invention also proposes, in a manner not known in the existing state of the art, that each train of carriages is formed by a cluster of a portion of said carriages arranged in succession and attached to one another by means of articulated attachments.

Each train of carriages therefore consists of a plurality of carriages attached to one another by means of an articulated attachment, which allows the train of carriages to be adapted to a curved or sinuous layout of the rail, and also allowing the articulated attachments to transmit tensile stresses between attached carriages, such that it is possible to both accelerate and decelerate said train of carriages by acting on only one of its carriages.

To actuate said trains of carriages, it is proposed that the mentioned actuating device is formed by multiple actuating units susceptible to being actuated independently and configured for driving together the different trains of carriages located at different positions of the rail, i.e., each actuating unit may actuate one or more trains of carriages independently from the rest of the actuating units in charge of actuating the other trains of carriages.

Therefore, there is no actuating device, such as a chain, for example, running along the entire length of the rail, rather the actuating device consists of multiple independent actuating units, allowing for the existence of at least one passive rail segment devoid of an actuating unit. This feature allows preventing the problems associated with the existence of a chain running along the entire length of the rail.

This allows enabling the trains of carriages to be actuated independently, and therefore allows them to move at different times and/or at different speeds along the rail, allowing, for example, the modification of the processing time inside the processing units, creating accumulations of trains of carriages in certain areas in order to adapt to the requirements of the loading unit or of the unloading unit, etc.

Furthermore, this solution allows simplifying plant maintenance, because a defective actuating unit or carriage may be readily identified and repaired or replaced, without having to take apart the entire conveying device, as said device is modular in nature, where said modules are the trains of carriages and the actuating units.

This modular nature also allows enlarging the plant in a simple manner, without the length of the rail entailing any drawback, where said rail may be as long as needed, where different processing units can be located, for example, in different rooms or on different floors of the premises in which the processing plant is located, without this entailing any problem, facilitating the adaptation of the processing plant to any premises.

Another additional advantage of the proposed solution is that even though according to the preferred solution the rail is a closed-loop rail to allow the return of the trains of carriages to the loading unit from the unloading unit, an open rail can be considered in which the trains of carriages are conveyed from the unloading unit to the loading unit by other means, for example stored on a platform with wheels which allows storing them behind the unloading unit and conveying them to the loading unit.

According to a first embodiment of the present invention, it is proposed that the multiple actuating units are distributed along the rail, each being associated with an active rail segment for interacting with one or more trains of carriages located in the corresponding active rail segment causing the movement thereof. In other words, the multiple actuating units are integrated along the rail, associated with active rail segments, such that any train of carriages located in one of said active rail segments is driven by the actuating unit associated with said active rail segment.

A passive rail segment devoid of an actuating unit is interposed between at least two successive active rail segments, with the length of the passive rail segment being less than the length of the trains of carriages. This allows assuring that when the rear end of a train of carriages comes out of an active rail segment, the front end of that same train of carriages has already entered a new active rail segment, such that the mentioned train of carriages will have traction at all times without requiring all the segments of the rail to be active rail segments.

At least one of the actuating units consists of a closed-loop belt with at least one portion parallel to the corresponding active rail segment, said belt being configured for producing, by contact, a pulling of the carriages making up a train of carriages located in said active rail segment.

For example, said closed-loop belt, i.e., a belt having a continuous layout, will be tensed between several pulleys defining, between two of said pulleys, a straight segment which will be parallel to the active rail segment. A train of carriages completely or partially located in said active rail segment will come into contact with the straight segment of the belt.

The belt will be actuated by a motor, for example by a motor connected to one of said pulleys, such that when the belt moves, the train of carriages in contact with the straight segment of the belt will be pulled by said belt, producing the movement thereof.

The mentioned pulling may be due simply to the friction existing between the train of carriages and the belt, although it is also proposed that the belt may include certain relief that is complementary to the relief of the train of carriages, producing an engagement between the belt and the train of carriages, achieving more precise pulling.

Therefore, an actuating unit will comprise a continuous-loop belt which will produce in at least one segment the pulling of the trains of carriages. Optionally, it is contemplated that at least one active rail segment comprises an actuating unit consisting of two symmetrical closed-loop belts on opposite sides of the active rail segment, with each belt being tensed between pulleys with at least one portion parallel to the corresponding active rail segment, with said belts being configured for producing, by contact, a coordinated pulling of the carriages making up a train of carriages located in said active rail segment, thereby achieving a much more precise pulling of the train of carriages.

For the purpose of achieving compact processing units, it is proposed that a plurality of U-shaped active rail segments are arranged adjacent one another, in succession, connected via passive rail segments defining a zigzagging rail area within said one or more food product processing units.

In other words, each of said U-shaped active rail segments shall consist of a first straight rail segment followed by a curved rail segment followed by a second straight rail segment, and wherein the corresponding actuation unit of said U-shaped active rail segment shall consist of a closed-loop belt including a straight portion parallel to the first straight rail segment, followed by a curved portion supported on a pulley and parallel to the curved rail segment, followed by another straight portion parallel to the second straight rail segment.

This zigzag construction of the rail allows achieving a long path inside a processing unit, and therefore a long processing time, at the same time achieving a compact processing unit.

It is alternatively contemplated that the U-shaped active rail segments are connected in succession to one another directly, without interposing a passive rail segment. Preferably, this option will include two symmetrical belts as the actuating unit of each active rail segment, where one and the same belt may have a portion associated with an active rail segment shared with another belt, and another portion associated with another active rail segment and another different belt.

Additionally or alternatively, it is also proposed that the actuating unit of at least one active rail segment consists of a pulley parallel to the corresponding active rail segment, which will be curved, said pulley being configured for producing, by contact, a pulling of the carriages making up a train of carriages located in said curved active rail segment.

According to an alternative embodiment of the actuating device, it is proposed that each train of carriages integrates an actuating unit intended for driving said train of carriages along the rail, said actuating unit moving together with the train of carriages in which it is integrated. Each actuating unit may regulate its speed and acceleration independently from the rest of the actuating units, allowing each train of carriages to move at a different speed in different segments of the rail, or even stopping in some segments.

In such case, each actuating unit will be preferably a unit operated by electricity, and said electricity may be supplied via the rail, along its length, or alternatively through electric batteries incorporated in the train of carriages itself.

The electric batteries may be charged in one or more recharging segments of the rail configured for charging the electric batteries of the actuating units of the trains of carriages which are located in said recharging segments, or they may be substituted with electric batteries loaded in one or more battery replacement segments configured for substituting the electric batteries of the actuating units of the trains of carriages which are located in said replacement segments.

Each actuating unit may receive control commands, for example wirelessly, or if the current is supplied by the rail, via said rail. Alternatively, the rail may be divided into segments, each being independently electrically powered, allowing the modification of the speed of the trains of carriages circulating through each of said segments by means of controlling the electric current supplied to the actuating units through each of said independent rail segments.

Therefore, according to the two main embodiments described, the actuating device may consist of actuating units integrated in active rail segments, intended for driving any train of carriages passing through said active rail segment, or may alternatively consist of one actuating unit integrated in each of the trains of carriages, driving that train of specific carriages along the entire length of the rail.

One control unit will control all the actuating units by means of control commands for coordinating the movement of all the trains of carriages.

In either of the two cases, it is proposed that the loading unit may consist of a curved rail segment including a loading point associated with a food product supply device, with the actuating units in charge of moving the trains of carriages through said loading point and the food product supply device coordinated for hanging, in an automatic manner, a batch of food product from the hooks of the carriages of each train of carriages passing through said loading point.

Preferably, the hooks of the carriages will be oriented in a direction opposite the conveyance direction, and the mentioned curved rail segment integrating the loading point defines a curvature around a horizontal axis such that the hooks of the trains of carriages circulating through said curved rail segment extend in a radial direction with respect to said horizontal axis. Said curved rail segment will therefore guide the carriages from an upper inverted position, in which the anchoring hooks will be upside down above the carriages, which prevents hanging food product from same, to a lower conveyance position in which the anchoring hooks are upside right below the carriages, which allows retaining food product hung from same.

In the curved rail segment, the separation between radially arranged hooks increases, which facilitates the operation of hanging the food product from same.

Similarly, it is also proposed that the hooks of the carriages are oriented in a direction opposite the conveyance direction, that the unloading unit includes a curved rail segment including an unloading point, wherein the curved rail segment defines a curvature around a horizontal axis such that the hooks of the trains of carriages circulating through said curved rail segment extend in a radial direction with respect to said horizontal axis, said curved rail segment guiding the carriages from a lower conveyance position, in which the hooks hang below the carriages, to an upper inverted position in which the hooks are located above the carriages, bringing about the release and falling of any food product hung from said hooks due to gravity when the hooks arrive at the unloading point.

It is additionally proposed that the conveying device includes one or more accumulation areas in which a certain number of trains of carriages accumulate, for example for adapting the operation of the plant to brief interruptions in the supply of food product in the loading unit, or in the collection of said food product in the unloading unit.

The loading unit receives a supply of an elongated food product, such as sausages, for example, from a filling machine which introduces a food product paste, or ground or minced food product inside an elongated casing, forming a succession of sausages attached at their ends.

The loading unit typically casts said elongated food product while rotating, casting the loops of the elongated product such that the cusp of said loops coincide with the loading point when a hook of a carriage is located in said loading point, such that said loop is hung from the mentioned hook. If operation of the filling machine is interrupted, for example to reload a batch of food product to be filled, the plant can continue to operate in an uninterrupted manner by means of the mentioned use of the accumulation areas for trains of carriages which allow supplying previously accumulated carriages loaded with food product to the processing units, and accumulating empty trains of carriages while waiting for the loading unit to be operative again.

When the actuating units are integrated in the trains of carriages, an accumulation area is enabled in a simple manner and said actuating units are configured for stopping or for reducing their speed in said accumulation areas.

When the actuating units are integrated in active rail segments of the rail it is proposed that each accumulation area comprises an active rail segment provided with an actuating unit incorporating:
- a ratchet-like engaging mechanism set to disengage when another train of carriages located in the rail impedes or delays the forward movement of a train of carriages located in said accumulation area, allowing their accumulation, and for driving said train of carriages when there is no obstacle in the rail, or
- a friction connection with the trains of carriages configured for slipping when another train of carriages located in the rail impedes or delays the forward movement of a train of carriages located in said accumulation area, allowing their accumulation, and for driving said train of carriages when there is no obstacle in the rail.

Either of these two embodiments allows, when there is an accumulation of trains of carriages stopped on the rail, the next trains of carriages to be stopped without requiring sophisticated detection and control systems for the actuating units located in said accumulation area, rather the actuating units will simply remain active but will not transmit movement to the trains of carriages as a result of the mentioned engaging mechanism or the low coefficient of friction existing between the belts of the actuating units and the trains of carriages which allows them to slip without transmitting movement when the train of carriages resists against the forward movement.

According to the preferred embodiment of the rail, said rail consists of two parallel partial rails, with each carriage being supported on both parallel partial rails, the corresponding conveyance hook hanging between both partial rails, achieving that the weight of the food product is centered and distributed between the two partial rails in a homogeneous manner.

It is also proposed that each carriage of each train of carriages preferably includes:
- a crosspiece formed by a vertical shaft and by a horizontal shaft which is articulated with respect to the carriage on either side of the crosspiece;
- a first yoke with two first wings surrounding the crosspiece, the horizontal shaft being articulated with respect to said two first wings;
- a second yoke with two second wings surrounding the crosspiece of an adjacent carriage, the vertical shaft of the crosspiece of the adjacent carriage being articulated with respect to said two second crosspieces; and wherein
- the second yoke is of a smaller size than the first yoke, both being configured so that the second yoke of a carriage is housed between the crosspiece and the first yoke of an adjacent carriage.

The hook will be integrally attached to the vertical shaft of the crosspiece, or optionally to the body of the carriage.

Therefore, each carriage will include a first yoke and a second yoke, the first yoke supporting the horizontal shaft of the crosspiece between its two first wings, and the second yoke attached in an articulated manner to the vertical shaft of another crosspiece of an adjacent carriage of the train of carriages, the second yoke being housed loosely inside the first yoke of the mentioned adjacent carriage.

Each crosspiece, and the corresponding first and second yokes thus have a construction similar to a universal joint.

Therefore, each crosspiece of the train of carriages acts like an articulated attachment between two adjacent carriages, allowing two degrees of freedom in the form of rotation around the vertical shaft allowing the train of carriages to follow a winding layout with defined curves when seen from above, and of rotation around the horizontal shaft allowing the train of carriages to follow a winding layout with defined curves when seen in elevation.

According to a second aspect, the present invention relates to a food product processing method in a processing plant according to the first aspect of the invention.

The proposed method includes the following steps, which are known in the existing state of the art:
- loading multiple batches of food product on the hooks of the carriages in the loading unit;
- conveying the batches of food product through one or more food product processing units by means of the movement of the carriages driven by an actuating device, applying processing to said batches of food product;
- unloading said batches of food product from the hooks of the carriages in the unloading unit, after processing thereof;
- conveying the carriages back to the loading unit by means of the actuating device.

The method of the present invention further proposes, in a manner that is not known in the existing state of the art, that:
- each batch of food product is located in an independent train of carriages formed by a portion of the carriages attached to one another in an articulated manner; and
- each train of carriages is actuated independently from the rest of the trains of carriages by means of transmitting distinct control commands to each one of a plurality of actuating units making up the actuating device, the actuating units being configured for driving different trains of carriages located at different positions of the rail.

In other words, it is proposed that each batch of foods is conveyed through the plant hung from the hooks of carriages connected to one another in an articulated manner forming a train of carriages, and that each of said trains of carriages may be conveyed through the plant by means of an independent control, driven by the multiple actuating units constituting the actuating device.

This allows each batch of food product to be conveyed through the plant independently from the conveyance of the rest of the batches, which allows adapting the production to different needs of the different batches of food product or to different needs of plant logistics.

It is also contemplated that rails may be installed on different levels, which allows for example superimposing processing units on two levels, with one rail passing through the lower level of processing units and another rail passing through the upper level of processing units, which allows doubling production with the same surface area.

In this case, preferably the loading unit and optionally also the unloading unit of both rails will be on the lower level, and the rail may include an ascending segment for raising the batches of food product to the upper level for processing, and a descending segment for returning the trains of carriages and the already processed food product they convey to the lower level for unloading.

There can be included a loading unit and an unloading unit which is independent for each rail, such that each rail is separated from the other rails, but it is also contemplated that a single loading unit may feed the two superimposed rails, or a single unloading unit may process trains of carriages coming from the two superimposed rails.

It will be understood that references to geometric positions, such as, for example, parallel, perpendicular, tangent, etc., allow deviations of up to ±5° with respect to the theoretical position defined by said nomenclature.

It will also be understood that any range of values that is offered may not be optimal as regards its end values and may require adaptations of the invention so that said end values are applicable, with said adaptations being within reach of one skilled in the art.

Other features of the invention will become apparent in the following detailed description of an embodiment.

### Brief Description of the Drawings

The foregoing and other advantages and features will be more fully understood based on the following detailed description of an embodiment in reference to the attached drawings which must be interpreted in an illustrative and non-limiting manner, in which:

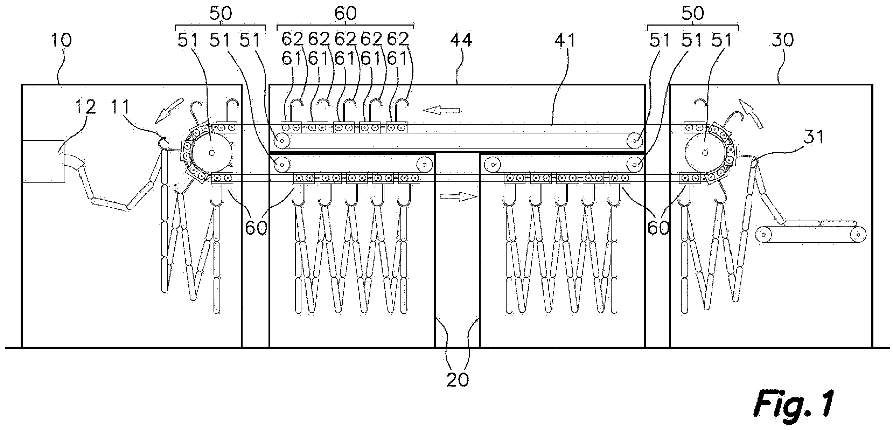

Figure 1 shows a schematic side elevational view of a plant like the one proposed, provided with a loading unit, two processing units, an unloading unit, an accumulation area, and a closed-loop rail communicating them, according to a first embodiment in which multiple actuating units are distributed along the rail and associated with active rail segments for producing the movement of the different independent trains of carriages distributed along the rail;

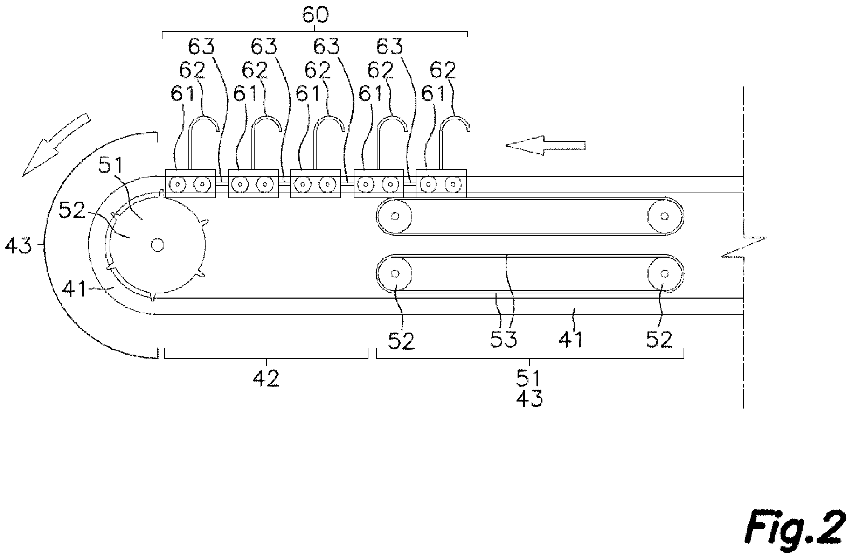

Figure 2 shows an enlarged view of a part of the rail shown in Figure 1, including the part of the rail going through the loading unit, showing how the rail includes an inverted segment in which the carriages circulate upside down with the corresponding hooks protruding upwards in the inverted position, a curved segment comprising the loading point at which the carriages are inverted and loaded with the food product, and a non-inverted segment in which the trains of carriages circulate upside right with the hooks hanging below same;

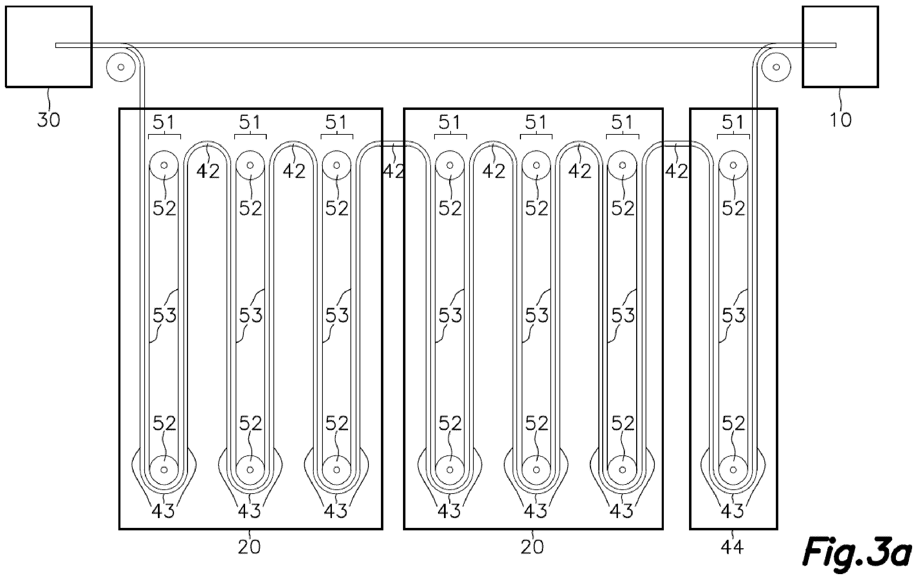

Figure 3a shows a schematic plan view of an embodiment similar to the one shown in Figure 1 but in which the rail has a zigzag layout both inside the processing units and in the accumulation area, according to a first embodiment in which each active rail segment is associated with a single actuating unit;

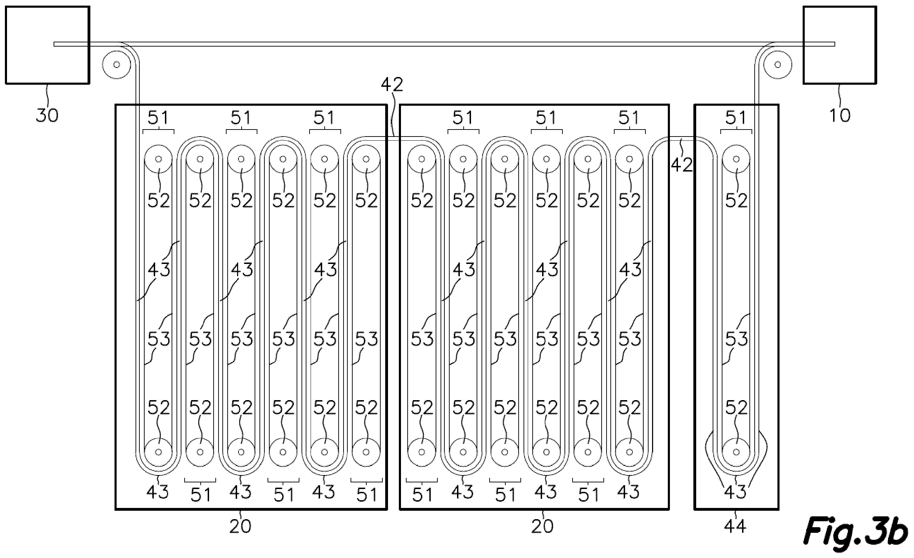

Figure 3b shows the same as Figure 3a, but according to a second embodiment in which the actuating unit of some of the active rail segments has two symmetrical continuous-loop belts, such that a train of carriages located in said active rail segment located between the two belts which simultaneously actuate it will be pulled in a precise manner;

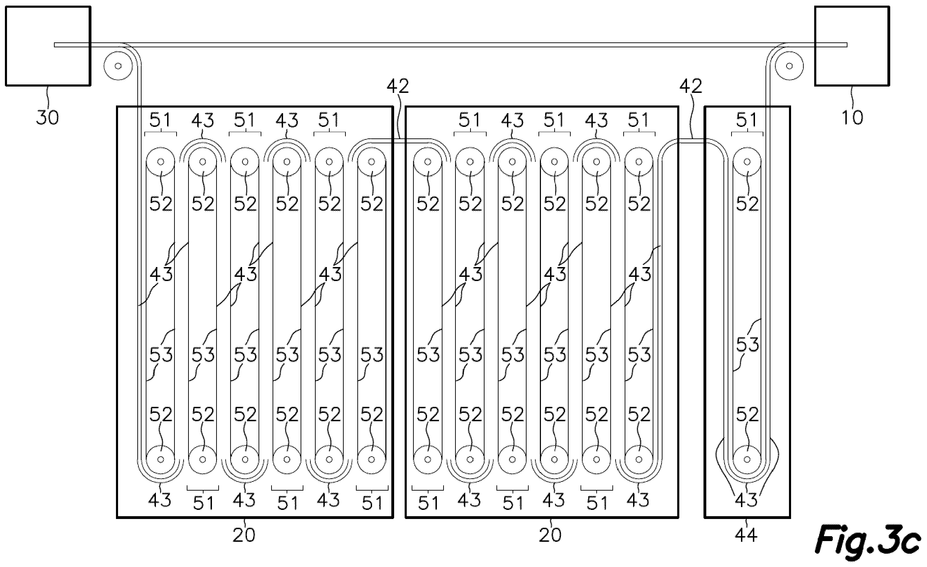

Figure 3c shows the same as Figure 3b, but according to a third embodiment in which in some active rail segments located between two continuous-loop belts the rail is made up of only said symmetrical belts, the trains of carriages being held and supported directly by said belts;

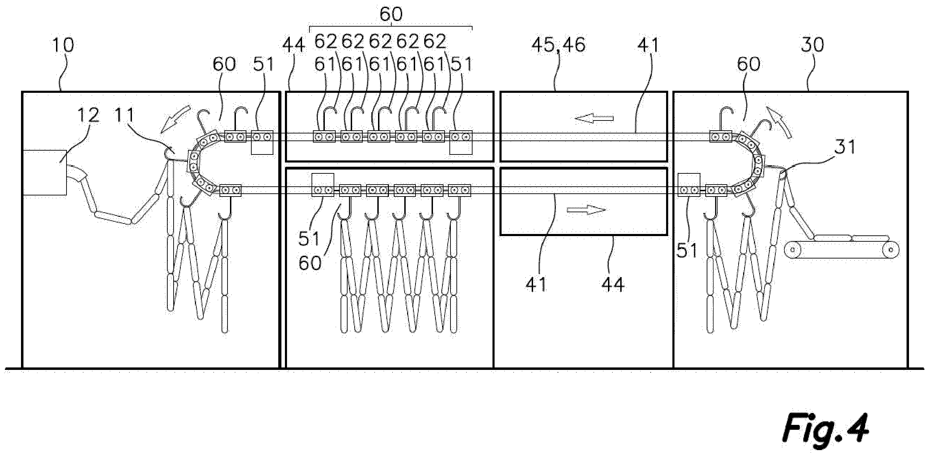

Figure 4 shows a schematic side elevational view of a plant like the one proposed, provided with a loading unit, two processing units, an unloading unit, an accumulation area, and a closed-loop rail communicating them, according to a second embodiment in which multiple actuating units are each attached to a train of carriages for producing the movement of the different independent trains of carriages distributed along the rail, each one moving together with its corresponding actuating unit;

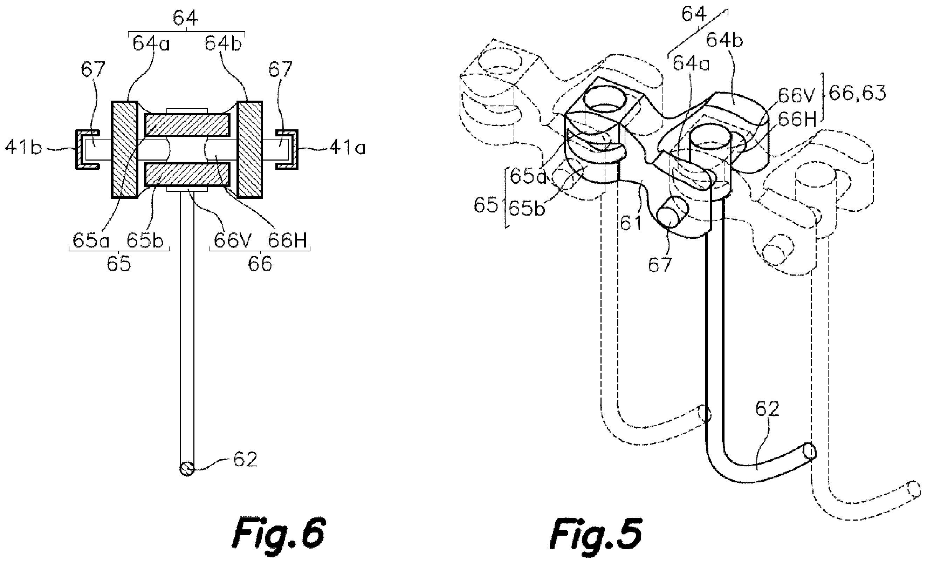

Figure 5 shows a detailed perspective view of a carriage according to a preferred embodiment, showing with a discontinuous line two adjacent carriages of the train of carriages attached to said carriage;
Figure 6 shows a cross-section view of a train of carriages like the one shown in Figure 5, supported on a rail formed by two partial rails, the cross-section being established by a vertical plane which sections the first and the second yokes attached to a crosspiece, but without sectioning the mentioned crosspiece.

### Detailed Description of an Embodiment

The attached drawings show illustrative and non-limiting embodiments of the present invention.

According to a preferred embodiment, the proposed processing plant consists of a conveying device in charge of conveying batches of food product in the form of sausages along the plant, collecting said food product in a loading unit 10, conveying it through one or more processing units 20, and delivering it in an unloading unit 30.

The processing units 20 can be, for example, an oven or a smoker, provided with a shell with an inlet opening and an outlet opening which the conveying device 10 goes through, inside which processing is applied to the food product, for example, processing by using heat or by smoking.

The mentioned conveying device consists of a closed-loop rail 41 through which there circulate multiple trains of carriages 60, independent of each other, in succession. The closed-loop rail 41 allows the trains of carriages 60 to move forward from the loading unit 10 to the unloading unit 30 along a conveyance path which occupies part of the closed loop, and to continue moving forward from the unloading unit 30 to the loading unit 10, along a return path which occupies the rest of the closed loop. The rail will include, along said return path, a cleaning unit for cleaning the trains of carriages.

Each train of carriages 60 consists of individual carriages 61 connected to one another by means of articulated attachments 63 which allow transmitting tensile and compression stresses between connected carriages 61.

Each carriage 61 includes projections 67 with a low coefficient of friction with a small surface of contact with the rail 61, or wheels 67 which support the carriage 61 on the rail 41, allowing its sliding movement along said rail 41, and it also includes a hook 62 attached to said carriage 61 from which a food product in the form of sausage can be hung. Preferably, said projection with a low coefficient of friction will be made of metal or rigid plastic with a high hardness and will have a circular shape, defining a single point of contact with the rail 61.

The preferred embodiment of the trains of carriages 60 is formed by carriages 41 attached to one another by means of articulated attachments 63 formed by crosspieces 66 from which the hooks 62 hang, each hook 62 being integral with one of the crosspieces 66.

The carriages 61 will be shaped like links of a chain, each carriage being attached in an articulated manner to one crosspiece 66 at one end and to another crosspiece 66 at the other opposite end.

The proposed crosspiece 66 is formed by a vertical shaft 66V, which extends until being connected with the hook 62, and by a horizontal shaft 66H. Each carriage 41 will have a first yoke 64 at one end that will surround the crosspiece 66 with two first wings 64a and 64b which in turn will be attached in an articulated manner to the horizontal shaft 66H, and a second yoke 65 at an opposite end that will surround another crosspiece 66 with two second wings 65a and 65b which in turn will be attached in an articulated manner to the vertical shaft 66V of said other crosspiece 66.

The second yoke 65 will have a smaller size than the first yoke 64, such that a second yoke 65 of a carriage 61 may be loosely housed between the crosspiece 66 and the first yoke 64 of another carriage 61, allowing the articulation of one carriage 61 with respect to the other one around the two vertical and horizontal shafts 66V and 66H similarly to a universal joint.

Evidently, the invention also contemplates the inverse construction, which is considered equivalent, in which the first yoke 64 is smaller than the second yoke 65, the first yoke 64 being housed between the crosspiece 66 and the second yoke 65.

According to the preferred embodiment, the rail 41 consists of two parallel partial rails 41a and 41b, with each carriage 61 being supported simultaneously on both partial rails 41a and 41b, the hook 62 being located between both partial rails 41a and 41b. This allows proper distribution of the weight of the food product on the rail 41.

It is also contemplated that the ends of the horizontal shaft 66H emerge from the carriage 61 on both sides, defining the projections with a low coefficient of friction which are in contact with the two parallel partial rails 61a and 61b for supporting and guiding the carriages 61 along the rail 41.

For producing the movement of the trains of carriages 60 along the rail 41, the plant incorporates an actuating device 50 which is proposed to consist of multiple independent actuating units 51 which allow driving in a distinct manner the different trains of carriages 60 distributed along the rail 41.

Therefore, the actuating device 50 does not extend along the entire length of the rail 41, but rather the actuating units 51 act on the different trains of carriages 60 on rail 60 including passive rails segments 42 devoid of actuating units 51.

The independent actuation of the different trains of carriages 60 allows modifying their speeds in different segments of the rail 41, thereby achieving that they stay for a longer or shorter time in a given processing unit 20, or even allowing different batches of food product to receive processing for a different duration in the same plant without needing to adapt the mentioned plant, but rather by simply regulating in a different manner the different actuating units 51.

According to the first proposed embodiment shown in Figure 1, the actuating units 51 are associated with active rail segments 43 of the rail 41, distributed along the length thereof, for driving the trains of carriages 60 which are located in said active rail segments 43.

Each actuating unit 51 may consist, for example, of a continuous-loop belt 53 tensed between pulleys 52 defining one or more segments parallel and adjacent to an active rail segment 43, said segment being configured for contacting with parts of the carriages 41 circulating through the active rail segment 43 producing the pulling thereof.

A motor will actuate one of the pulleys 52 producing the movement of the belt and also the movement of any train of carriages 60 in contact with same, driving it in the conveyance direction.

Since the carriages 61 of each train of carriages 60 are connected to one another by means of an articulated attachment 63, even if just one of the carriages 61 contacts with the actuating unit 51 movement of the entire train of carriages 60 is produced.

It is advisable for the length of the passive rail segments 42 located between two active rail segments 43 to have a smaller length than the length of the trains of carriages 60, such that it is assured that a train of carriages 60 will always be at least partially in contact with an active rail segment 43, thereby preventing being jammed in a passive rail segment 42. This feature may be omitted, for example, when the passive rail segment 42 is on a slope, which allows assuring that a train of carriages 60 will move through it without requiring actuating units 51.

The mentioned belt 53 can be a rough belt or include protrusions at predefined intervals, complementary with a relief included on the trains of carriages 60, thereby allowing engagement between the belt 53 and the pulled trains of carriages 60, thus assuring precise movement. A similar result can be achieved with a smooth belt 53 made of material with a high coefficient of friction, such as gum, rubber, or the like.

According to a preferred embodiment shown in Figures 3a and 3b, the rail 41 will have, inside the processing units 20, a zigzag path for the purpose of prolonging its length inside the processing units 20, therefore prolonging the time during which the food product remains inside the processing unit 20.

The mentioned zigzag layout of the rail 41 consists of parallel straight segments attached by semicircular segments. In the case shown in Figure 3a, it is proposed that the active rail segments 43 are formed by two of said consecutive straight segments and the semicircular segment connecting them, the corresponding actuating unit 51 being formed by a closed-loop belt 53 tensed between two pulleys 52, two straight segments of the belt 53 being parallel and adjacent to the two straight segments of the active rail segment 43 and one of the pulleys 52 being concentric with the semicircular segment of the active rail segment 43, such that the belt 53 is also parallel and adjacent to the mentioned semicircular segment of the rail 41.

By repeating this construction multiple times, connecting each of said active rail segments 43 with semicircular passive rail segments 42, the mentioned zigzagging circuit is obtained.

It is alternatively contemplated that, as shown in Figure 3b, each active rail segment 43 is associated with two symmetrical actuating units 51 located on either side of the active rail segment 43. Each of the actuating units will have a construction identical to that previously described, formed by pulleys 52 and a continuous-loop belt 53 tensed between said pulleys 52, such that the straight segments of the belts 53 of the two symmetrical actuating units 51 will be simultaneously in contact with a train of carriages 60 located in the active rail segment 43, producing the pulling thereof in a precise and controlled manner.

According to another further alternative embodiment shown in Figure 3c, it is contemplated that in those active rail segments comprised between two symmetrical belts constituting the actuating unit thereof, the rail will be constituted only by said symmetrical belts, with the trains of carriages being supported only on said belts when they are in said active rail segment.

In this embodiment, in those segments in which two symmetrical belts do not exist, for example, as it is a passive rail segment or an active rail segment provided only with a single belt or another type of non-symmetrical actuating unit, it will be necessary to provide a rail that is not made up of said actuating unit, for example a stationary rail on which there move trains of carriages which will have to be transferred from one type of rail to the other while they are moving.

It is also contemplated that the belt 53 may be smooth and made of a material with a low or calibrated coefficient of friction so as to allow pulling a train of carriages 60 in contact therewith only when there is no obstacle on the rail 60, i.e., when there is no other train of carriages 60 after it. For example, said belt can be made of a flexible plastic material with a smooth finish. The geometry of the belt may also affect the surface of contact between said belt and the train of carriages 60, for example a wide belt will have a larger surface of contact and therefore higher grip than a narrow belt or even one with a cylindrical section, which is the shape that most reduces the surface of contact and therefore the grip between the belt and the train of carriages 60.

This feature allows the trains of carriages 60 to accumulate in the active rail segment 43 provided with the mentioned smooth belt 53 when there is a retention on the rail 41, thus constituting an accumulation area 44 of trains of carriages 60, without needing to apply a precise control of the actuating unit 51 of said smooth belt 53 which allows stopping it when said accumulation exists, simply limited to the belt 53 slipping on the accumulated trains of carriages 60 without producing the movement thereof.

A similar effect may be achieved by including an engaging mechanism between the motor and the pulley 52 actuated by said motor, with the engaging mechanism being tared to obtain the result described above, despite using a rough belt 52 or with a high coefficient of friction.

The accumulation areas 44 before the loading unit 10 are of particular interest, as it allows having a supply of stored trains of carriages 60 for loading batches of food product at any time needed, adapting to possible brief interruptions in the supply of food product.

It is also of interest to use accumulation areas 44 before the unloading unit 30, which allows adapting the unloading rate to different needs other than those of the proposed processing plant, such as for example the different needs of a packaging machine located after the unloading unit.

It is also proposed that one of the actuating units 51 may consist of only one pulley 52, part of which is adjacent and parallel to a curved active rail segment 43, such that said pulley 52 contacts with the carriages 61 of a train of carriages 60 located in said curved active rail segment 43, dispensing with the mentioned belt 53. The features of the coefficient of friction of the mentioned pulley 52 and its roughness may be equivalent to those described in relation to the belt 53, achieving an equivalent result.

According to an alternative embodiment, the actuating units 51 are not associated with the rail 41, but rather they are associated with the trains of carriages 60. In other words, each train of carriages 60 integrates an actuating unit 51 which drives and moves together with the train of carriages 60 along the rail 60. In such case, the entire rail 41 must be considered a passive rail segment 42, since the rail 41 does not push the trains of carriages 60 at all.

It is considered for example that each actuating unit 51 is provided with an electric motor connected to drive wheels supported on the rail 41, said actuating unit being attached to the rest of the train of carriages 60 by means of an articulated attachment 63, such that the actuating unit 51 may slide over the rail 41, actuating the motor and producing the pulling or pushing of the rest of the train of carriages 60.

Each actuating unit 51 may receive specific control commands, be programmed with a given routine, or receive control commands depending on the position of the corresponding train of carriages 60 inside the rail 41.

It is also contemplated that the actuating units 51 may be configured for stopping or slowing down the speed of the trains of carriages 60 in a given area of the rail 41, turning said area into a storage area 44 for trains of carriages 60.

The actuating unit 51 may receive power supply and/or control instructions through the rail 41, which in such case would include conductive tracks along its length to which the actuation unit 51 would be connected by means of sliding electric contacts such as brushes, for example.

Different segments of the rail may have conductive tracks independent of one another which allow regulating the speed of the actuating units 51 in a distinct manner in each of said independent segments by means of the distinct regulation of the energy transmitted through said conductive tracks in each of the mentioned independent segments.

It is alternatively contemplated that each actuating unit 51 may incorporate an electric battery which supplies energy during the movement thereof. In such case, for the purpose of recharging the electric batteries, the rail 41 must include one or more recharging segments 45 configured for recharging the electric batteries of the trains of carriages 60 located in said recharging segments 45. A recharging segment may include for example conductive tracks to which the actuating unit 51 will be connected by means of electric contacts, preferably sliding electric contacts such as brushes, while the train of carriages 60 remains in said recharging segment 45. The recharging segments 45 may coincide with the accumulation areas 44.

In the event of using electric batteries, it is contemplated that the rail 41 may include one or more battery replacement segments 46 in which the fully or partially discharged batteries of the actuating units 51 are substituted with fully charged batteries. Said replacement of the batteries can be done by hand, by an operator, or automatically by means of a battery replacement device in charge of taking out the depleted battery, introducing it in a battery charger, taking out another previously charged battery from the battery charger, and inserting said charged battery in the actuating unit 51, for example by means of a robotic arm.

According to a preferred embodiment of the loading unit 10, said unit includes a food product supply device 12, proposed to be a head that expels the food product in the form of sausage, casting it into the air while at the same time the head rotates around a horizontal axis, such that the food product is expelled forming loops. The rail 41 going through said loading unit 10 defines a loading point 11 at which a hook 62 of a train of carriages 60 is located for, in coordination with the supply device 12, coinciding with the apex of each loop of the food product expelled in the moment in which said zenith is falling, such that said zenith falls inside the hook 62 with that loop of food product being hung from that hook 62. The train of carriages 60 will move through the loading unit 10 such that each of its hooks 62 passes through the loading point 11 in the precise moment for collecting one of the loops of the food product expelled by the supply device 12.

The loading point 11 will preferably be located in a semicircular segment of the rail 41, concentric to a horizontal axis. The trains of carriages 60 will arrive at said semicircular segment from an inverted rail segment in which the trains of carriages 60 circulate upside down, the hooks 62 being in the inverted position, and come out of same through a non-inverted rail segment in which the trains of carriages 60 circulate in the normal position, with the hooks 63 hanging downwards, and the trains of carriages 60 will circulate with the hooks 62 oriented in the direction opposite the direction of forward movement of the train of carriages 60.

Therefore, when the trains of carriages 60 circulate through the semicircular segment, the hooks extend radially with respect to said horizontal axis, being separated from one another and facilitating the food product engaging the hook 62 located at the loading point 11, and the hooks 62 located at the loading point 11 being oriented upwards for receiving the falling food product.

Preferably, the semicircular segment including the loading point 11 will be an active rail segment 43 in which the corresponding actuating unit 51 engages with the train of carriages 60 for producing precise movement of said train of carriages 60.

The unloading unit 30 also includes a curved segment around a horizontal axis and comprising an unloading point 31. The curved segment receives trains of carriages 60 loaded with food product circulating in the non-inverted position the hooks 62 of which, when they go through the curved segment, transition from hanging vertically to extending radially around the horizontal axis, being separated from one another and tilting until reaching the horizontal when they go through the unloading point 31, which brings about the food product falling from the corresponding hook 62. After going through the curved segment, the trains of carriages 60 are in the inverted position.

It will be understood that the different parts constituting the invention described in an embodiment can be freely combined with parts described in other different embodiments even though said combination has not been explicitly described, provided that such combination is not detrimental.

## Claims

1. A food product processing plant including:
• a food product loading unit (10), one or more food product processing units (20), and a food product unloading unit (30) arranged successively and connected via a food product conveying device;
wherein the conveying device includes
• a rail (41) defining a conveyance path through said one or more processing units (20);
• a plurality of carriages (61) movably supported on said rail (41), each carriage (61) including a hook (62) configured for hanging food items for the conveyance thereof; and
• an actuating device (50) configured for driving said plurality of carriages (61) along the conveyance path;
wherein
• the conveying device includes multiple independent and successive trains of carriages (60) along said rail (41), each train of carriages (60) being intended for supporting a batch of food product;
• the actuating device (50) includes multiple independently actuated actuating units (51), configured for driving different trains of carriages (60) located at different positions of the conveyance path, allowing independent and distinct actuation of the multiple trains of carriages (60); and
• the rail (41) includes at least one passive rail segment (42) devoid of actuating units (51)
**characterized in that** each train of carriages (60) is formed by a cluster of a portion of said carriages (61) arranged in succession and attached to one another by articulated attachments (63).

2. The processing plant according to claim 1, wherein the multiple actuating units (51) are distributed along the conveyance path, each being associated with an active rail segment (43) for interacting with one or more trains of carriages (60) located in the corresponding active rail segment (43) causing the movement of said train of carriages (60), with the passive rail segment (42) being located between two active rail segments (43) and the length of the passive rail segment (42) being less than the length of the trains of carriages (60).

3. The processing plant according to claim 2, wherein at least one active rail segment (43) comprises an actuating unit (51) consisting of two symmetrical closed-loop belts (53) on opposite sides of the active rail segment (43), with each belt (53) being tensed between pulleys (52) with at least one portion parallel to the corresponding active rail segment (43), with said belts being configured for producing, by contact, a coordinated pulling of the carriages (61) making up a train of carriages (60) located in said active rail segment (43).

4. The processing plant according to claim 3, wherein a plurality of U-shaped active rail segments (43) are arranged adjacent one another, connected in succession, defining a zigzagging rail area within said one or more food product processing units (20).

5. The processing plant according to claim 2, 3, or 4, wherein the actuating unit (51) of at least one active rail segment (43) which is curved consists of a pulley (52) parallel to the corresponding curved active rail segment (43), with said pulley (52) being configured for producing, by contact, a pulling of the carriages (61) making up a train of carriages (60) located in said active rail segment (43).

6. The processing plant according to any one of preceding claims 2 to 5, wherein the conveying device includes one or more accumulation areas (44), each comprising an active rail segment (43) provided with an actuating unit (51) incorporating:
• an engaging mechanism set to disengage when another train of carriages (60) located in the rail (41) impedes or delays the forward movement of a train of carriages (60) located in said accumulation area (44), allowing the accumulation of said train of carriages (60) without stopping the actuating unit (51), and set to drive said train of carriages (60) when there is no obstacle in the rail (41), or
• a friction connection with the trains of carriages (60) configured for slipping when another train of carriages (60) located in the rail (41) impedes or delays the forward movement of a train of carriages (60) located in said accumulation area (44), allowing the accumulation of said train of carriages (60) without stopping the actuating unit (51), and for driving said train of carriages (60) when there is no obstacle in the rail (41).

7. The processing plant according to claim 1, wherein each train of carriages (60) integrates an actuating unit (51) which drives said train of carriages (60) along the rail (41) and moves together with said train of carriages (60), and wherein the passive rail segment (42) occupies all or most of the length of the rail (41).

8. The processing plant according to claim 7, wherein
• each actuating unit (51) receives power supply through the rail (41); or
• each actuating unit (51) includes an electric battery powering it, the rail including one or more recharging segments (45) configured for charging the electric batteries of the actuating units (51) of the trains of carriages (60) which are located in said recharging segments (45); or
• each actuating unit (51) includes an electric battery powering it, the rail (41) including one or more battery replacement segments (46) configured for substituting the electric batteries of the actuating units (51) of the trains of carriages (60) which are located in said battery replacement segments (46) with another charged electric battery.

9. The processing plant according to any one of the preceding claims, wherein the rail (41) of the loading unit (10) includes a curved segment including a loading point (11) associated with a food product supply device (12), with the actuating units (51) in charge of moving the trains of carriages (60) located in said loading point (11) and the food product supply device (12) for hanging, in an automatic manner, a batch of food product from the hooks (62) of the carriages (61) of each train of carriages (60) passing through said loading point (11) being coordinated with one another.

10. The processing plant according to claim 9, wherein the hooks (62) of the carriages (61) are oriented in a direction opposite the conveyance direction, and wherein the curved rail segment including the loading point (11) defines a curvature around a horizontal axis such that the hooks (62) of the trains of carriages (60) circulating through said curved segment extend in a radial direction with respect to said horizontal axis, said curved segment guiding the carriages (61) from an upper inverted position, in which the hooks (62) are upside down, which prevents hanging food product from same, to a lower conveyance position in which the hooks (62) are upside right, which allows retaining food product hung from same.

11. The processing plant according to any one of the preceding claims, wherein the hooks (62) of the carriages (61) are oriented in a direction opposite the conveyance direction, and the rail (41) included in the unloading unit (30) includes a curved segment including an unloading point (31), wherein the curved segment defines a curvature around a horizontal axis such that the hooks (62) of the trains of carriages (60) circulating through said curved segment extend in a radial direction with respect to said horizontal axis, said curved segment guiding the carriages (61) from a lower conveyance position to an upper inverted position bringing about the release and falling of any food product hung from said hooks (62).

12. The processing plant according to any one of the preceding claims, wherein the rail (41) consists of two parallel partial rails (41a, 41b), each carriage (61) being supported on both parallel partial rails (41a, 41b) with the corresponding hook (62) hanging between both partial rails (41a, 41b).

13. The processing plant according to any one of the preceding claims, wherein each carriage (61) of each train of carriages (60) includes:
• a first yoke (64) with two first wings (64a, 64b) surrounding a crosspiece (66) formed by a vertical shaft (66V) and by a horizontal shaft (66H), the horizontal shaft (66H) being articulated with respect to said two first wings (64a, 64b);
• a second yoke (65) with two second wings (65a, 65b) surrounding the crosspiece (66) of an adjacent carriage (61), the vertical shaft (66V) of the crosspiece (66) of the adjacent carriage (61) being articulated with respect to said two second wings (65a, 65b); and wherein
• the second yoke (65) is of a smaller size than the first yoke (64), both first and second yokes (64, 65) being configured so that the second yoke (65) of a carriage (61) is housed between the crosspiece (66) and the first yoke (64) of an adjacent carriage (61).

14. Method for processing a food product in a processing plant according to any of the preceding claims 1 to 13, the method including the following steps:
• loading multiple batches of food product on the hooks (62) of the carriages (61) in the loading unit (10);
• conveying the batches of food product through one or more food product processing units (20) by means of the movement of the carriages (61) driven by an actuating device (50), applying processing to said batches of food product;
• unloading said batches of food product from the hooks (62) of the carriages (61) in the unloading unit (30), after processing thereof;
• conveying the carriages (61) back to the loading unit (10) by means of the actuating device (50);
**characterized in that**
• the loading of each batch of food product is performed in an independent train of carriages (60) formed by a portion of the carriages (61) attached to one another by means of articulated attachments (63);
• the actuation of each train of carriages (60) is performed independently from the rest of the trains of carriages (60) by means of transmitting distinct control commands to each one of a plurality of actuating units (51) making up the actuating device (50), the actuating units (51) being configured for driving different trains of carriages (60) located at different positions of the rail (41).

## Patentansprüche

1. Anlage zur Verarbeitung von Lebensmittelprodukten beinhaltend:
• eine Ladungseinheit für Lebensmittelprodukten (10), eine oder mehrere Verarbeitungseinheiten für Lebensmittelprodukte (20) und eine Entladungseinheit für Lebensmittelprodukte (30), welche aufeinanderfolgend angeordnet sind und via eine Fördervorrichtung für Lebensmittelprodukte verbunden sind;
wobei die Fördervorrichtung Folgendes beinhaltet
• eine Schiene (41), welche einen Förderweg durch die genannte eine oder mehreren Verarbeitungseinheiten (20) definiert;
• eine Vielzahl von Wagen (61), welche beweglich auf der genannten Schiene (41) gestützt sind, wobei jeder Wagen (61) einen Haken (62) beinhaltet, welcher dazu ausgebildet ist, Lebensmittel zur Förderung derselben zu hängen; und
• eine Betätigungsvorrichtung (50), welche dazu ausgebildet ist, die genannte Vielzahl von Wagen (61) entlang des Förderwegs anzutreiben;
wobei
• die Fördervorrichtung mehrfache unabhängige und aufeinanderfolgende Züge von Wagen (60) entlang der genannten Schiene (41) beinhaltet, wobei jeder Zug von Wagen (60) dafür bestimmt ist, ein Los von Lebensmittelprodukt zu stützen;
• die Betätigungsvorrichtung (50) mehrfache unabhängig betätigte Betätigungseinheiten (51) beinhaltet, welche dazu ausgebildet sind, verschiedene Züge von Wagen (60), welche sich in unterschiedlichen Stellungen des Förderwegs befinden, anzutreiben, sodass eine unabhängige und unterschiedliche Betätigung der mehrfachen Züge von Wagen (60) erlaubt wird; und
• die Schiene (41) mindestens ein passives Schienensegment (42) beinhaltet, welches keine Betätigungseinheiten (51) aufweist;
**dadurch gekennzeichnet, dass** jeder Zug von Wagen (60) aus einer Gruppe eines Teils der genannten Wagen (61) gebildet ist, welche hintereinander angeordnet sind und durch gelenkige Befestigungen (63) aneinander befestigt sind.

2. Verarbeitungsanlage nach Anspruch 1, wobei die mehrfachen Betätigungseinheiten (51) entlang des Förderwegs verteilt sind, wobei jede mit einem aktiven Schienensegment (43) assoziiert ist, um mit einem oder mehreren Zügen von Wagen (60), welche sich im entsprechenden aktiven Schienensegment (43) befinden, zusammenzuwirken, sodass die Bewegung des genannten Zuges von Wagen (60) hervorgerufen wird, wobei sich das passive Schienensegment (42) zwischen zwei aktiven Schienensegmenten (43) befindet und die Länge des passiven Schienensegments (42) kleiner als die Länge der Züge von Wagen (60) ist.

3. Verarbeitungsanlage nach Anspruch 2, wobei mindestens ein aktives Schienensegment (43) eine Betätigungseinheit (51) umfasst, welche aus zwei symmetrischen geschlossenen Bändern (53) auf gegenüberliegenden Seiten des aktiven Schienensegments (43) besteht, wobei jedes Band (53) zwischen Riemenscheiben (52) mit mindestens einem Teil parallel zum entsprechenden aktiven Schienensegment (43) gespannt sind, wobei die genannten Bänder dazu ausgebildet sind, durch Kontakt, ein koordiniertes Ziehen der Wagen (61), welche einen Zug von Wagen (60) bilden, welcher sich im genannten aktiven Schienensegment (43) befindet, zu erzeugen.

4. Verarbeitungsanlage nach Anspruch 3, wobei eine Vielzahl von U-förmigen aktiven Schienensegmenten (43) zueinander benachbart angeordnet sind, hintereinander verbunden, unter Definierung eines Zickzack-Schienenbereichs innerhalb der genannten einen oder mehreren Verarbeitungseinheiten für Lebensmittelprodukte (20).

5. Verarbeitungsanlage nach Anspruch 2, 3 oder 4, wobei die Betätigungseinheit (51) mindestens eines aktiven Schienensegments (43), welches gekrümmt ist, aus einer Riemenscheibe (52) parallel zur entsprechenden gekrümmten aktiven Schienensegment (43) besteht, wobei die genannte Riemenscheibe (52) dazu ausgebildet ist, durch Kontakt, ein Ziehen der Wagen (61), welche einen Zug von Wagen (60) bilden, welcher sich im genannte aktiven Schienensegment (43) befindet, zu erzeugen.

6. Verarbeitungsanlage nach einem der vorhergehenden Ansprüche 2 bis 5, wobei die Fördervorrichtung eine oder mehrere Ansammlungsbereiche (44) beinhaltet, wobei jeder ein aktives Schienensegment (43) umfasst, welches mit einer Betätigungseinheit (51) versehen ist, enthaltend:
• einen Kupplungsmechanismus, welcher dazu eingestellt ist, sich auszukuppeln, wenn ein anderer Zug von Wagen (60), welcher sich in der Schiene (41) befindet, die Vorwärtsbewegung eines Zuges von Wagen (60), welcher sich im genannten Ansammlungsbereich (44) befindet, verhindert oder verzögert, sodass die Ansammlung des genannten Zuges von Wagen (60) ohne die Betätigungseinheit (51) anzuhalten erlaubt wird, und dazu eingestellt ist, den genannten Zug von Wagen (60) anzutreiben, wenn es kein Hindernis in der Schiene (41) gibt, oder
• eine kraftschlüssige Verbindung mit den Zügen von Wagen (60), welche dazu ausgebildet ist, zu gleiten, wenn ein anderer Zug von Wagen (60), welcher sich in der Schiene (41) befindet, die Vorwärtsbewegung eines Zuges von Wagen (60), welcher sich im genannten Ansammlungsbereich (44) befindet, verhindert oder verzögert, sodass die Ansammlung des genannten Zuges von Wagen (60) ohne die Betätigungseinheit (51) anzuhalten erlaubt wird, und den genannten Zug von Wagen (60) anzutreiben, wenn es kein Hindernis in der Schiene (41) gibt.

7. Verarbeitungsanlage nach Anspruch 1, wobei jeder Zug von Wagen (60) eine Betätigungseinheit (51) integriert, welche den genannten Zug von Wagen (60) entlang der Schiene (41) antreibt und sich zusammen mit dem genannten Zug von Wagen (60) bewegt, und wobei das passive Schienensegment (42) die gesamte oder die meiste Länge der Schiene (41) belegt.

8. Verarbeitungsanlage nach Anspruch 7, wobei
• jede Betätigungseinheit (51) Stromversorgung über die Schiene (41) bekommt; oder
• jede Betätigungseinheit (51) eine elektrische Batterie beinhaltet, welche sie versorgt, wobei die Schiene ein oder mehrere Nachladungssegment (45) beinhaltet, welche dazu ausgebildet sind, die elektrischen Batterien der Betätigungseinheiten (51) der Züge von Wagen (60), welche sich im genannten Nachladungssegment (45) befinden, aufzuladen; oder
• jede Betätigungseinheit (51) eine elektrische Batterie beinhaltet, welche sie versorgt, wobei die Schiene (41) ein oder mehrere Batterieaustauschsegmente (46) beinhaltet, welche dazu ausgebildet sind, die elektrischen Batterien der Betätigungseinheiten (51) der Züge von Wagen (60), welche sich in den genannten Batterieaustauschsegmenten (46) befinden, durch eine andere aufgeladene elektrische Batterie zu ersetzen.

9. Verarbeitungsanlage nach einem der vorhergehenden Ansprüche, wobei die Schiene (41) der Ladungseinheit (10) ein gekrümmtes Segment beinhaltet, welches einen Ladungspunkt (11) beinhaltet, welcher mit einer Zuführungsvorrichtung für Lebensmittelprodukte (12) assoziiert ist, wobei die Betätigungseinheiten (51) verantwortlich für die Bewegung der Züge von Wagen (60), welche sich im genannten Ladungspunkt (11) befinden, und die Zuführungsvorrichtung für Lebensmittelprodukte (12) zum, automatischen, Hängen eines Loses von Lebensmittelprodukt von den Haken (62) der Wagen (61) jedes Zuges von Wagen (60), welche durch den genannten Ladungspunkt (11) durchgehen, miteinander koordiniert sind.

10. Verarbeitungsanlage nach Anspruch 9, wobei die Haken (62) der Wagen (61) in eine der Förderrichtung entgegengesetzten Richtung orientiert sind, und wobei das gekrümmte Schienensegment, welches den Ladungspunkt (11) beinhaltet, eine Krümmung um eine Horizontalachse herum definiert, sodass sich die Haken (62) der Züge von Wagen (60), welche durch das genannte gekrümmte Segment laufen, in einer Radialrichtung in Bezug auf die genannte Horizontalachse erstrecken, wobei das genannte gekrümmte Segment die Wagen (61) von einer oberen umgekehrten Stellung, in welcher die Haken (62) auf dem Kopf sind, was das Hängen von Lebensmittelprodukt derselben verhindert, zu einer unteren Förderstellung, in welcher die Haken (62) richtig rum sind, was das Halten von Lebensmittelprodukt davon hängend erlaubt, führt.

11. Verarbeitungsanlage nach einem der vorhergehenden Ansprüche, wobei die Haken (62) der Wagen (61) in eine der Förderrichtung entgegengesetzten Richtung orientiert sind, und die Schiene (41), welche in der Entladungseinheit (30) beinhaltet ist, ein gekrümmtes Segment beinhaltet, welches einen Entladungspunkt (31) beinhaltet, wobei das gekrümmte Segment eine Krümmung um eine Horizontalachse herum definiert, sodass sich die Haken (62) der Züge von Wagen (60), welche durch das genannte gekrümmte Segment laufen, in einer Radialrichtung in Bezug auf die genannte Horizontalachse erstrecken, wobei das genannte gekrümmte Segment die Wagen (61) von einer unteren Förderstellung zu einer oberen umgekehrten Stellung führt, sodass das Befreien und das Fallenlassen jedes Lebensmittelprodukts, welches von den genannten Haken (62) hängt, bewirkt wird.

12. Verarbeitungsanlage nach einem der vorhergehenden Ansprüche, wobei die Schiene (41) aus zwei parallelen Teilschienen (41a, 41b) besteht, wobei jeder Wagen (61) auf beiden parallelen Teilschienen (41a, 41b) gestützt ist, wobei die entsprechenden Haken (62) zwischen beiden Teilschienen (41a, 41b) hängen.

13. Verarbeitungsanlage nach einem der vorhergehenden Ansprüche, wobei jeder Wagen (61) aus jedem Zug von Wagen (60) Folgendes beinhaltet:
• einen ersten Bügel (64) mit zwei ersten Flügeln (64a, 64b), welche ein Kreuzstück (66) umgeben, welches aus einer vertikalen Welle (66V) und aus einer horizontalen Welle (66H) gebildet ist, wobei die horizontale Welle (66H) in Bezug auf die genannten zwei ersten Flügel (64a, 64b) angelenkt ist;
• einen zweiten Bügel (65) mit zwei zweiten Flügeln (65a, 65b), welche das Kreuzstück (66) eines benachbarten Wagens (61) umgeben, wobei die vertikale Welle (66V) des Kreuzstücks (66) des benachbarten Wagens (61) in Bezug auf die genannten zwei zweiten Flügel (65a, 65b) angelenkt ist; und wobei
• der zweite Bügel (65) eine kleinere Größe als der erste Bügel (64) aufweist, wobei sowohl der erste Bügel (64) als auch der zweite Bügel (65) derart ausgebildet sind, dass der zweite Bügel (65) eines Wagens (61) zwischen dem Kreuzstück (66) und dem ersten Bügel (64) eines benachbarten Wagens (61) aufgenommen ist.

14. Verfahren zur Verarbeitung eines Lebensmittelprodukts in einer Verarbeitungsanlage nach einem der vorhergehenden Ansprüche 1 bis 13, wobei das Verfahren die folgenden Schritte beinhaltet:
• das Laden von mehrfachen Losen von Lebensmittelprodukt auf den Haken (62) der Wagen (61) in der Ladungseinheit (10);
• das Fördern der Lose von Lebensmittelprodukt durch eine oder mehrere Verarbeitungseinheiten für Lebensmittelprodukte (20) mittels der Bewegung der Wagen (61), welche durch eine Betätigungsvorrichtung (50) angetrieben werden, wobei eine Verarbeitung auf die genannten Lose von Lebensmittelprodukt angewendet wird;
• das Entladen der genannten Lose von Lebensmittelprodukt aus den Haken (62) der Wagen (61) in der Entladungseinheit (30), nach der Verarbeitung derselben;
• das Fördern der Wagen (61) zurück zur Ladungseinheit (10) mittels der Betätigungsvorrichtung (50);
**dadurch gekennzeichnet, dass**
• das Laden jedes Loses von Lebensmittelprodukt in einem unabhängigen Zug von Wagen (60) durchgeführt wird, welches aus einem Teil der Wagen (61), welche aneinander mittels gelenkiger Befestigungen (63) befestigt sind, gebildet ist;
• das Betätigen jedes Zuges von Wagen (60) unabhängig vom Rest der Züge von Wagen (60) durchgeführt wird, mittels der Übertragung von unterschiedlichen Steuerbefehlen zu jeder einer Vielzahl von Betätigungseinheiten (51), welche die Betätigungsvorrichtung (50) bilden, wobei die Betätigungseinheiten (51) dazu ausgebildet sind, verschiedene Züge von Wagen (60), welches sich in unterschiedlichen Stellungen der Schiene (41) befinden, anzutreiben.

## Revendications

1. Installation de traitement de produits alimentaires comprenant :
• une unité de chargement de produits alimentaires (10), une ou plusieurs unités de traitement de produits alimentaires (20) et une unité de déchargement de produits alimentaires (30) disposées successivement et reliées par un dispositif de transport de produits alimentaires ;
dans laquelle le dispositif de transport comprend
• un rail (41) définissant un chemin d'acheminement à travers ladite une ou plusieurs unités de traitement (20) ;
• une pluralité de chariots (61) supportés de manière mobile sur ledit rail (41), chaque chariot (61) comprenant un crochet (62) configuré pour suspendre des articles alimentaires en vue de leur transport ; et
• un dispositif d'actionnement (50) configuré pour entraîner ladite pluralité de chariots (61) le long de la voie de transport ;
dans laquelle
• le dispositif de transport comprend multiples trains indépendants et successifs de chariots (60) le long dudit rail (41), chaque train de chariots (60) étant destiné à supporter un lot de produits alimentaires ;
• le dispositif d'actionnement (50) comprend multiples unités d'actionnement (51) à actionnement indépendant, configurées pour entraîner différents trains de chariots (60) situés à différentes positions du chemin d'acheminement, permettant un actionnement indépendant et distinct des multiples trains de chariots (60) ; et
• le rail (41) comprend au moins un segment de rail passif (42) dépourvu d'unités d'actionnement (51) **caractérisée en ce que** chaque train de chariots (60) est formé par un groupe d'une partie desdits chariots (61) disposés en succession et attachés les uns aux autres par des attaches articulées (63).

2. Installation de traitement selon la revendication 1, dans laquelle les multiples unités d'actionnement (51) sont réparties le long du chemin d'acheminement, chacune étant associée à un segment de rail actif (43) pour interagir avec un ou plusieurs trains de chariots (60) situés dans le segment de rail actif correspondant (43), provoquant le mouvement dudit train de chariots (60), le segment de rail passif (42) étant situé entre deux segments de rail actifs (43) et la longueur du segment de rail passif (42) étant inférieure à la longueur des trains de chariots (60).

3. Installation de traitement selon la revendication 2, dans laquelle au moins un segment de rail actif (43) comprend une unité d'actionnement (51) constituée de deux courroies symétriques en boucle fermée (53) sur des côtés opposés du segment de rail actif (43), chaque courroie (53) étant tendue entre des poulies (52) dont au moins une partie est parallèle au segment de rail actif correspondant (43), lesdites courroies étant configurées pour produire, par contact, une traction coordonnée des chariots (61) constituant un train de chariots (60) situé dans ledit segment de rail actif (43).

4. Installation de traitement selon la revendication 3, dans laquelle une pluralité de segments de rail actifs en forme de U (43) sont disposés les uns adjacents aux autres, reliés en succession, définissant une zone de rail en zigzag à l'intérieur de ladite une ou plusieurs unités de traitement de produits alimentaires (20).

5. Installation de traitement selon la revendication 2, 3 ou 4, dans laquelle l'unité d'actionnement (51) d'au moins un segment de rail actif (43) qui est incurvé consiste en une poulie (52) parallèle au segment de rail actif incurvé correspondant (43), ladite poulie (52) étant configurée pour produire, par contact, une traction des chariots (61) composant un train de chariots (60) situé dans ledit segment de rail actif (43).

6. Installation de traitement selon l'une des revendications précédentes 2 à 5, dans laquelle le dispositif de transport comprend une ou plusieurs zones d'accumulation (44), chacune comprenant un segment de rail actif (43) pourvu d'une unité d'actionnement (51) incorporant :
• un mécanisme d'engagement réglé pour se désengager lorsqu'un autre train de chariots (60) situé dans le rail (41) entrave ou retarde le mouvement vers l'avant d'un train de chariots (60) situé dans ladite zone d'accumulation (44), permettant l'accumulation dudit train de chariots (60) sans arrêter l'unité d'actionnement (51), et réglé pour entraîner ledit train de chariots (60) lorsqu'il n'y a pas d'obstacle dans le rail (41), ou
• une liaison par friction avec les trains de chariots (60) configurée pour glisser lorsqu'un autre train de chariots (60) situé dans le rail (41) entrave ou retarde le mouvement vers l'avant d'un train de chariots (60) situé dans ladite zone d'accumulation (44), permettant l'accumulation dudit train de chariots (60) sans arrêter l'unité d'actionnement (51), et pour entraîner ledit train de chariots (60) lorsqu'il n'y a pas d'obstacle dans le rail (41).

7. Installation de traitement selon la revendication 1, dans laquelle chaque train de chariots (60) intègre une unité d'actionnement (51) qui entraîne ledit train de chariots (60) le long du rail (41) et se déplace avec ledit train de chariots (60), et dans laquelle le segment de rail passif (42) occupe la totalité ou la plupart de la longueur du rail (41).

8. Installation de traitement selon la revendication 7, dans laquelle
• chaque unité d'actionnement (51) est alimentée par le rail (41) ; ou
• chaque unité d'actionnement (51) comprend une batterie électrique qui l'alimente, le rail comprenant un ou plusieurs segments de recharge (45) configurés pour charger les batteries électriques des unités d'actionnement (51) des trains de chariots (60) qui sont situés dans lesdits segments de recharge (45) ; ou
• chaque unité d'actionnement (51) comprend une batterie électrique qui l'alimente, le rail (41) comprenant un ou plusieurs segments de remplacement de batterie (46) configurés pour remplacer les batteries électriques des unités d'actionnement (51) des trains de chariots (60) qui sont situés dans lesdits segments de remplacement de batterie (46) par une autre batterie électrique chargée.

9. Installation de traitement selon l'une quelconque des revendications précédentes, dans laquelle le rail (41) de l'unité de chargement (10) comprend un segment incurvé comprenant un point de chargement (11) associé à un dispositif d'alimentation en produits alimentaires (12), les unités d'actionnement (51) chargées de déplacer les trains de chariots (60) situés dans ledit point de chargement (11) et le dispositif d'alimentation en produits alimentaires (12) pour suspendre, de manière automatique, un lot de produits alimentaires aux crochets (62) des chariots (61) de chaque train de chariots (60) passant par ledit point de chargement (11) étant coordonnées entre elles.

10. Installation de traitement selon la revendication 9, dans laquelle les crochets (62) des chariots (61) sont orientés dans une direction opposée à la direction d'acheminement, et dans laquelle le segment de rail incurvé comprenant le point de chargement (11) définit une courbure autour d'un axe horizontal de sorte que les crochets (62) des trains de chariots (60) circulant dans ledit segment incurvé s'étendent dans une direction radiale par rapport à cet axe horizontal, ledit segment incurvé guidant les chariots (61) d'une position supérieure inversée, dans laquelle les crochets (62) sont à l'envers, ce qui empêche d'y suspendre des produits alimentaires, à une position inférieure d'acheminement dans laquelle les crochets (62) sont à l'endroit, ce qui permet de retenir les produits alimentaires qui y sont suspendus.

11. Installation de traitement selon l'une quelconque des revendications précédentes, dans laquelle les crochets (62) des chariots (61) sont orientés dans une direction opposée à la direction d'acheminement, et le rail (41) compris dans l'unité de déchargement (30) comprend un segment incurvé comprenant un point de déchargement (31), dans laquelle le segment incurvé définit une courbure autour d'un axe horizontal de sorte que les crochets (62) des trains de chariots (60) circulant dans ledit segment incurvé s'étendent dans une direction radiale par rapport audit axe horizontal, ledit segment incurvé guidant les chariots (61) d'une position inférieure d'acheminement à une position supérieure inversée, ce qui cause le relâchement et la chute de tout produit alimentaire suspendu desdits crochets (62).

12. Installation de traitement selon l'une quelconque des revendications précédentes, dans laquelle le rail (41) consiste en deux rails partiels parallèles (41a, 41b), chaque chariot (61) étant supporté par les deux rails partiels parallèles (41a, 41b), le crochet correspondant (62) étant suspendu entre les deux rails partiels (41a, 41b).

13. Installation de traitement selon l'une quelconque des revendications précédentes, dans laquelle chaque chariot (61) de chaque train de chariots (60) comprend :
• un premier étrier (64) avec deux premières ailes (64a, 64b) entourant une traverse (66) formée par un arbre vertical (66V) et par un arbre horizontal (66H), l'arbre horizontal (66H) étant articulé par rapport auxdites deux premières ailes (64a, 64b) ;
• un deuxième étrier (65) avec deux deuxièmes ailes (65a, 65b) entourant la traverse (66) d'un chariot adjacent (61), l'arbre vertical (66V) de la traverse (66) du chariot adjacent (61) étant articulé par rapport auxdites deux deuxièmes ailes (65a, 65b) ; et dans laquelle
• le deuxième étrier (65) est d'une taille plus petite que le premier étrier (64), le premier et le deuxième étriers (64, 65) étant configurés de sorte que le deuxième étrier (65) d'un chariot (61) soit logé entre la traverse (66) et le premier étrier (64) d'un chariot adjacent (61).

14. Procédé de traitement d'un produit alimentaire dans une installation de traitement selon l'une quelconque des revendications précédentes 1 à 13, le procédé comprenant les étapes suivantes :
• charger plusieurs lots de produits alimentaires sur les crochets (62) des chariots (61) dans l'unité de chargement (10) ;
• transporter les lots de produits alimentaires à travers une ou plusieurs unités de traitement des produits alimentaires (20) au moyen du mouvement des chariots (61) entraînés par un dispositif d'actionnement (50), en appliquant un traitement auxdits lots de produits alimentaires ;
• décharger lesdits lots de produits alimentaires des crochets (62) des chariots (61) dans l'unité de déchargement (30), après leur traitement ;
• transporter les chariots (61) vers l'unité de chargement (10) au moyen du dispositif d'actionnement (50) ;
**caractérisé en ce que**
• le chargement de chaque lot de produits alimentaires est effectué dans un train indépendant de chariots (60) formé par une partie des chariots (61) attachés les uns aux autres au moyen d'attaches articulées (63) ;
• l'actionnement de chaque train de chariots (60) est effectué indépendamment du reste des trains de chariots (60) par la transmission d'ordres de commande distincts à chacune d'une pluralité d'unités d'actionnement (51) composant le dispositif d'actionnement (50), les unités d'actionnement (51) étant configurées pour actionner différents trains de chariots (60) situés à différentes positions du rail (41).
